# EUROPEAN PATENT SPECIFICATION

(11) **EP 3 773 028 B1**
(45) Date of publication and mention of the grant of the patent: **14.02.2024**
(21) Application number: 19718575.4
(22) Date of filing: 27.03.2019
(51) Int. Cl.: A24F 40/50, A61M 15/06, A61M 11/04

(54) **APPARATUS FOR GENERATING AEROSOL FROM AN AEROSOLISABLE MEDIUM, AN ARTICLE OF AEROSOLISABLE MEDIUM AND A METHOD OF DETERMINING A PARAMETER OF AN ARTICLE**
VORRICHTUNG ZUM ERZEUGEN VON AEROSOL AUS EINEM AEROSOLISIERBAREN MEDIUM, EIN ARTIKEL AUS EINEM AEROSOLISIERBAREN MEDIUM UND EIN VERFAHREN ZUM BESTIMMEN EINES PARAMETERS EINES ARTIKELS
APPAREIL POUR GENERER UN AEROSOL A PARTIR D'UN MILIEU AEROSOLABLE, ARTICLE EN MILIEU AEROSOLABLE ET PROCEDE POUR DETERMINER UN PARAMETRE D'UN ARTICLE

(30) Priority: 29.03.2018 GB 201805258
(43) Date of publication of application: 17.02.2021
(73) Proprietor: Nicoventures Trading Limited, London WC2R 3LA (GB)
(72) Inventor: MOLONEY, Patrick, London WC2R 3LA (GB); CHAN, Justin Han Yang, London WC2R 3LA (GB); KORUS, Anton, London WC2R 3LA (GB)
(74) Representative: D Young & Co LLP
(86) International application number: PCT/EP2019/057776
(87) International publication number: WO 2019/185744

(56) References cited:
- WO-A1-2017/205692
- US-A1- 2016 158 782
- US-A1- 2016 331 027
- US-A1- 2017 259 170

## Description

### Technical Field

The present invention relates to an apparatus for generating aerosol from an aerosolisable medium, an article of aerosolisable medium, a system including an apparatus for generating aerosol from an aerosolisable medium and an article of aerosolisable medium and a method of determining a parameter associated with the article.

### Background

Articles such as cigarettes, cigars and the like burn tobacco during use to create tobacco smoke. Attempts have been made to provide alternatives to these articles by creating products that release compounds without combusting. Examples of such products are so-called "heat not burn" products, also known as tobacco heating products or tobacco heating apparatus, which release compounds by heating, but not burning, material.

WO2017205692 discloses vaporizers and vaporizer systems that include a device in communication with a vaporizer and which include one or more features related to control of functions and/or features of the vaporizer, identification of a cartridge and/or a vaporizable material in the cartridge, data exchange (either one-way or two-way) between a cartridge and a vaporizer with which the cartridge is engaged.

### Summary

According to a first example, there is provided an apparatus for generating aerosol from an aerosolisable medium. The apparatus comprises: a housing; a chamber for receiving an article comprising aerosolisable medium and including a marker; and a controller. The controller is configured to receive: a first input indicative of a rate of movement of the article, received in use, in the chamber; and a second input indicative of a parameter of said article. At least the second input is determined based on the marker.

According to the second example, there is provided an article comprising aerosolisable medium for use with the apparatus of the first example. The article comprises a marker indicative of a parameter of the article.

According to a third example, there is provided a system comprising the apparatus and article comprising aerosolisable medium as discussed above.

According to a fourth example, there is provided a method of determining a parameter of an article comprising aerosolisable medium. The method comprises: receiving a first input indicative of a rate of movement of said article; receiving a second input indicative of a parameter of said article; determining the parameter of the article based on the received first input and second input.

Further features and advantages of the invention will become apparent from the following description of preferred embodiments of the invention, given by way of example only, which is made with reference to the accompanying drawings.

### Brief Description of the Drawings

Figure 1 shows a perspective view of an example of an apparatus for heating an article comprising aerosolisable medium;
Figure 2 shows a top view of an example of an apparatus for heating an article comprising aerosolisable medium;
Figure 3 shows a cross-sectional view of the example apparatus of Figure 1;
Figure 4 shows a side view of an example of an article comprising an aerosolisable medium;
Figure 5 shows a side view of an example of an article comprising an aerosolisable medium;
Figure 6 shows an example of an optical sensor an example of the article of Figure 5;
Figure 7 shows an example of a signal that is received by a controller of the apparatus;
Figure 8 shows a side view of an example of an article comprising an aerosolisable medium; and
Figure 9 shows an example of a flow chart of a method for determining a parameter associated with an article.

### Detailed Description

As used herein, the terms "aerosolisable medium" includes materials that provide volatilised components upon heating, typically in the form of an aerosol. "Aerosolisable medium" includes any tobacco-containing material and may, for example, include one or more of tobacco, tobacco derivatives, expanded tobacco, reconstituted tobacco or tobacco substitutes. "Aerosolisable medium" also may include other, non-tobacco, products, which, depending on the product, may or may not contain nicotine. "Aerosolisable medium" may for example be in the form of a solid, a liquid, a gel or a wax or the like. "Aerosolisable medium" may for example also be a combination or a blend of materials.

The present disclosure relates to apparatus that heat an aerosolisable medium to volatilise at least one component of the aerosolisable medium, typically to form an aerosol which can be inhaled, without burning or combusting the aerosolisable medium. Such apparatus is sometimes described as a "heat-not-burn" apparatus or a "tobacco heating product" or "tobacco heating device" or similar. Similarly, there are also so-called e-cigarette devices, which typically vaporise an aerosolisable medium in the form of a liquid, which may or may not contain nicotine. The aerosolisable medium may be in the form of or provided as part of a rod, cartridge or cassette or the like which can be inserted into the apparatus. One or more aerosol generating elements for volatilising the aerosolisable medium may be provided as a "permanent" part of the apparatus or may be provided as part of the consumable which is discarded and replaced after use. In one example, the one or more aerosol generating elements may be in the form of one or more heaters.

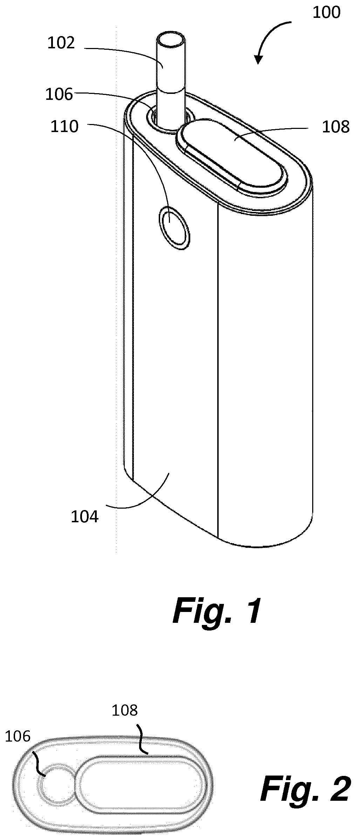

Figure 1 shows an example of an apparatus 100 for generating an aerosolisable medium. The apparatus 100 may be an aerosol provision device. In broad outline, the apparatus 100 may be used to heat a replaceable article 102 comprising an aerosolisable medium, to generate an aerosol or other inhalable medium which is inhaled by a user of the apparatus 100. Figure 2 shows a top view of the example of the apparatus 100 shown in Figure 1.

The apparatus 100 comprises a housing 104. The housing 104 has an opening 106 in one end, through which the article 102 may be inserted into a heating chamber (not shown). In use, the article 102 may be fully or partially inserted into the chamber. The heating chamber may be heated by one or more heating elements (not shown). The apparatus 100 may also comprise a lid, or cap 108, to cover the opening 106 when no article 102 is in place. In Figures 1 and 2, the cap 108 is shown in an open configuration, however the cap 108 may move, for example by sliding, into a closed configuration. The apparatus 100 may include a user-operable control element 110, such as a button or switch, which operates the apparatus 100 when pressed.

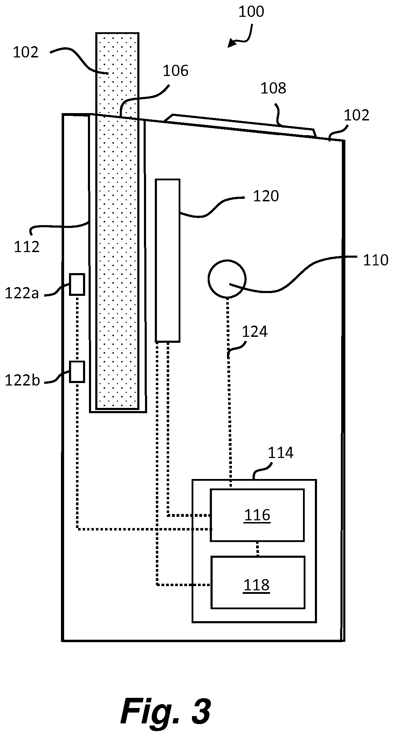

Figure 3 shows a cross-sectional view of an example of an apparatus 100 as shown in Figure 1. The apparatus 100 has a receptacle, or heating chamber 112 which is configured to receive the article 102 to be heated. In one example, the heating chamber 112 is generally in the form of a hollow cylindrical tube into which an article 102 comprising aerosolisable medium is inserted for heating in use. However, different arrangements for the heating chamber 112 are possible. In the example of Figure 3, an article 102 comprising aerosolisable medium has been inserted into the heating chamber 112. The article 102 in this example is an elongate cylindrical rod, although the article 102 may take any suitable shape. In this example, an end of the article 102 projects out of the apparatus 100 through the opening 106 of the housing 104 such that user may inhale the aerosol through the article 102 in use. The end of the article 102 projecting from the apparatus 100 may include a filter material. In other examples the article 102 is fully received within the heating chamber 112 such that it does not project out of the apparatus 100. In such a case, the user may inhale the aerosol directly from the opening 106, or via a mouthpiece which may be connected to the housing 102 around the opening 106.

The apparatus 100 comprises one or more aerosol generating elements. In one example, the aerosol generating elements are in the form of heaters 120 arranged to heat the article 102 located within the chamber 112. In one example, the one or more heaters 120 are resistive heating elements that heat up when an electric current is applied to them. In other examples, the one or more heaters 120 may comprise a susceptor material that is heated via induction heating. In the example of the one or more heaters 120 comprising a susceptor material, the apparatus also comprises one or more induction elements which generate a varying magnetic field that penetrate the one or more heating elements. The one or more heaters 120 may be located internally or externally of the heating chamber 112. In one example, the one or more heaters may comprise a thin film heater that is wrapped around an external surface of the heating chamber 112. For example, the heater 120 may be formed as a single heater or may be formed of a plurality of heaters aligned along the longitudinal axis of the heating chamber 112. The heating chamber 112 may be annular or tubular, or at least part-annular or part-tubular around its circumference. In one particular example, the heating chamber 112 is defined by a stainless steel support tube. The heating chamber 112 is dimensioned so that substantially the whole of the aerosolisable medium in the article 102 is located within the heating chamber 112, in use, so that substantially the whole of the aerosolisable medium may be heated. In other examples, the one or more heaters 120 may include a susceptor that is located on or in the article 102, wherein the susceptor material is heatable via a varying magnetic field generated by the apparatus 100. The heating chamber 112 may be arranged so that selected zones of the aerosolisable medium can be independently heated, for example in turn (over time) or together (simultaneously), as desired.

In some examples, the apparatus 100 includes an electronics compartment 114 that houses electrical control circuitry or controller 116 and/or a power source 118, such as a battery. In other examples, a dedicated electronics compartment may not be provided and the controller 116 and power source 118 are located generally within the apparatus 100. The electrical control circuitry or controller 116 may include a microprocessor arrangement, configured and arranged to control the heating of the aerosolisable medium as discussed further below. In some examples, the controller 116 is configured to receive one or more inputs from one or more sensors 122a, 122b, as discussed further below. The controller 116 may also receive a signal from the control element 110 and activate the one or more heaters 120 in response to the received signal and the received inputs. Electronic elements within the device 100 may be electrically connected via one or more connecting elements 124, shown depicted as dashed lines.

The power source 118 may be, for example, a battery, such as a rechargeable battery or a non-rechargeable battery. Examples of suitable batteries include, for example, a lithium-ion battery, a nickel battery (such as a nickel-cadmium battery), an alkaline battery and/or the like. The battery is electrically coupled to the one or more heaters to supply electrical power when required and under control of the controller 116 to heat the aerosolisable medium without causing the aerosolisable medium to combust. Locating the power source 118 adjacent to the one or more heaters 120 means that a physically large power source 118 may be used without causing the apparatus 100 as a whole to be unduly lengthy. As will be understood, in general a physically large power source 118 has a higher capacity (that is, the total electrical energy that can be supplied, often measured in Amp-hours or the like) and thus the battery life for the apparatus 100 can be longer.

It is sometimes desirable for the apparatus 100 to be able to identify or recognise the particular article 102 that has been introduced into the apparatus 100. For example, the apparatus 100, including in particular the heating control provided by the controller 116, will often be optimised for a particular arrangement of the article 102 (e.g. one or more of size, shape, particular smokable material, etc.). It would be undesirable for the apparatus 100 to be used with an aerosol medium or an article 102 having different characteristics.

In addition, if the apparatus 100 can identify or recognise the particular article 102, or at least the general type of article 102, that has been introduced into the apparatus 100, this can help eliminate or at least reduce counterfeit or other non-genuine articles 102 being used with the apparatus 100.

In one example, the one or more sensors 122a, 122b are configured to sense a marker of the article 102, as described in more detail below. The sensors 122a, 122b may provide one or more inputs to the controller 116, based on the sensed marker, and the controller 116 may determine a parameter of the article 102, such as whether the article 102 is a genuine article, based on the received one or more inputs. The controller 116 may activate the one or more heaters 120 depending on the determined parameter of the article 102. The apparatus 100 is therefore provided with means of detecting whether the article 102 is a genuine product or not and may alter the operation of the apparatus 100 accordingly, for example, by preventing supply of power to the one or more heaters 120 if a non-genuine article is detected. Preventing use of the apparatus 100 when a non-genuine article is inserted into the apparatus 100 would reduce the likelihood of consumers having a poor experience due to the use of illicit consumables.

In some examples, the controller 116 is able to determine a parameter of the article 102 based on the received one or more inputs and tailor the heat profile provided by the one or more heaters 120 based on the determined parameter. The heater 120 of the apparatus 100 may be configured to provide a first heating profile if the parameter of the article 102 has a first characteristic (e.g., by the controller 116 controlling the supply of power) and the heater 120 is configured to provide a second heating profile if the parameter has a second characteristic. For example, the apparatus 100 may be able to determine whether the consumable is a solid or a non-solid consumable and adjust the heating profile accordingly. In other examples, the apparatus 100 may be able to distinguish between different blends of tobacco in the article 102 and tailor the heating profile accordingly to provide an optimised heating profile for the specific blend of tobacco that has been inserted into the apparatus 100.

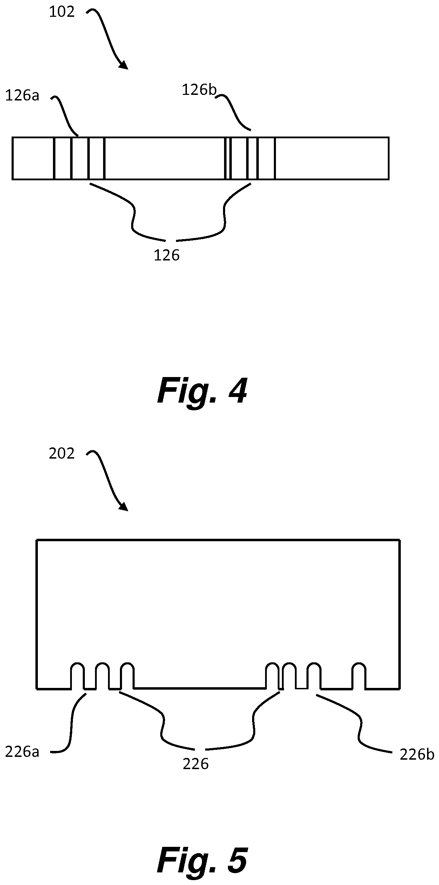

Figure 4 shows a schematic longitudinal side view of an example of an article 102 comprising aerosolisable medium for use with the apparatus 100. In some examples, the article 102 also comprises a filter arrangement (not shown) in addition to the aerosolisable medium.

The article 102 also comprises a marker 126 that is configured to be sensed by the one or more sensors 122a, 122b of the apparatus 100. The marker 126 may be made up of marker elements and represents encoded information representative of a parameter of the article. As mentioned above, the parameter may indicate the maker of the article, such that the article 102 can be confirmed as genuine. In other examples, the parameter may indicate the type of aerosolisable medium in the article 102, such as whether the aerosolisable medium is in the form of a solid, liquid or gel. The parameter may also be indicative of a variant of the aerosolisable medium, such as whether the aerosolisable medium comprises Burley tobacco or Virginia tobacco. In other examples, the parameter may indicate a heating profile that should be used to heat the article 102. The parameter may indicate other characteristics of the article 102. Providing a marker 126 indicating a parameter associated with the article 102 allows the apparatus 100 to provide a tailored experience for the user based on the parameter.

The marker 126 may comprise an optical characteristic, for example, in Figure 4, the marker 126 is a series of marker elements in the form of lines on the outside of the article 102. The lines are shown as being uniform width, but in other examples, the width of the lines may be varied. In the example of Figure 4, the arrangement of the lines, such as the spacing between adjacent lines, is indicative of an encoded parameter associated with the article 102. The marker 126, once read, may be compared to a look-up table (LUT) storing a correspondence between data associated with the marker 126 (e.g., a binary sequence indicated by the indicia) and a heating profile or other action associated with the apparatus. In addition, the data associated with the marker 126 may be encoded according to a secret key common to all aerosol provision apparatus from a certain manufacturer/geographic origin, and the apparatus is configured to decode the encoded data before searching for the decoded data in the LUT.

In the example of the article 102 being cylindrical, the one or more marker elements, such as lines, may extend part of the way around the perimeter or circumference of the article 102 or all of the way around the perimeter of the article 102. In some examples the one or more sensors 122a, 122b configured to sense the marker 126 may be arranged at a specific location within the apparatus 100. For example, the one or more sensors 122a, 122b may be arranged adjacent to one side of the chamber 112 and may have a limited detection range. Providing marker elements that extend all of the way around the perimeter of the article 102 facilitates the sensing of the marker 126 by the one or more sensors 122a, 122b, irrespective of the particular orientation of the article 102 within the apparatus 100.

The marker 126 may be formed in a number of different ways, and be formed of a number of different materials, depending on the particular sensing arrangement of the apparatus 100 with which the article 102 is intended to be used. The marker 126 may comprise optical features such as lines, gaps or notches, surface roughness, barcodes, QR codes and/or reflective material. In other examples, the marker 126 comprise an electrically conductive feature and the one or more sensors 122a, 122b may be configured to detect a change in capacitance or resistance when the article 102, including the marker 126, is inserted into the apparatus 102. Providing a non-optical sensor 122a, 122b may potentially be more robust compared with an optical sensor because it would not be affected by deposition on an optical sensor or degradation of optical sensor over the life of the apparatus 100. In other examples, the marker 126 may comprise a combination of optical features and electrically conducting features.

The marker 126 may, for example, be provided externally of the smokable article 102, internally of the article 102, or both externally and internally of the article 102. Where optical sensing is used on its own or in combination with some other sensing, such as capacitive sensing, the marker 126 is preferably provided on the outside of the article 102 so that the marker 126 is visible to the one or more sensors 122a, 122b sensors of the apparatus 100.

In some implementations, the one or more sensors 122a, 122b are configured to sense a marker of the article 102 as the article is inserted into, or moves within, the receptacle. In such a case, the outputs of the sensors 122a, 122b may vary based on the rate at which the article 102 moves. Insertion rates vary considerably between different users. For example, insertion speeds have been observed to be between around 2mm/s and 2000mm/s, with average insertion speeds between 100 mm/s and 600 mm/s. Such a wide variation in insertion speed can lead to articles being incorrectly identified or authorised. In configurations where the sensor has a relatively small field of view, such as sensor located internally in the apparatus, this variation in speed may have a significant impact on recognition accuracy. The present disclosure describes ways in which this can be compensated for.

In one example, the marker 126 comprises a first region 126a of marker elements and a second region 126b of marker elements. The first region 126a and the second region 126 may be adjacent to each other, or more preferably, be spaced apart from each other. Providing a space between the first region 126a of marker elements and second region 126b of marker elements reduces the likelihood of interference between the two regions. The first region 126a of marker elements may be configured to be sensed by the first sensor 122a and the second region 126b of marker elements may be configured to be sensed by the second sensor 122b. However, in other examples a single sensor 122a, 122b may be used to sense both the first region 126a of the marker 126 and the second region 126b of the marker 126.

The first region 126a may be configured to be sensed by the first sensor 122a to provide a first input indicative of a rate of movement of the article 102 to the controller. In this example, the first sensor 122a is a movement sensor. In one example, the rate of movement of the article 102 is determined by measuring a time period between adjacent marker elements of the first region 126a, such as lines or notches, to pass the first sensor 122a. In some examples, the marker elements of the first region 126a are arranged at a predetermined spacing. In some examples, the marker elements of the first region 126a are arranged at a uniform spacing from each other. In other examples, the spacings between consecutive markers may be predetermined (and hence known), but not uniform.

The controller 116 may receive the first input from the first sensor 122a and determine a rate of movement of the article 102 by dividing the predetermined spacing of two marker elements by the time period that occurs between the two marker elements passing the first sensor 122a. In other examples, the sensor 122a may be provided with associated circuitry capable of determining the rate of movement of the article 102 and provide this rate of movement to the controller 116.

In the example of the article 102 shown in Figure 4, the first region 126a of the marker is formed of four marker elements. Each of these marker elements are spaced from each other at a predetermined uniform distance. However, in other examples, the first region 126a comprises a single marker element and the first sensor 122a comprises two sensing elements spaced at a known distance. In the example of the first region 126a comprising a single marker element, the rate of movement of the article 102 can be determined from the time period between the marker element of the first region 126a passing the first sensing element and the second sensing element of the first sensor 122a.

The second region 126b may include marker elements that are configured to be sensed by the second sensor 122b to enable a parameter associated with the article 102 to be determined by the controller 16. In this example, the second sensor 122b can be considered to be a parameter sensor. In the example shown in Figure 4, the second region 126b includes four marker elements in the form of lines. The marker elements are spaced form each other at varying distances. The arrangement of the marker elements of the second region 126b is indicative of a parameter of the article 102, as described in more detail below. For example, the arrangement of the marker elements of the second region 126b may be indicative of the article 102 being a genuine article 102 intended for use with the apparatus 100, or it could be indicative of the heating profile to be used with this article 102. The second sensor 122b is configured to provide a second input indicative of the parameter of the article 102 to the controller 116.

In some examples, the marker elements of the first region 126a pass through/by the first sensor 122a as the article 102 is being inserted into the apparatus 100 and the rate of movement is the rate at which the article 102 is being inserted into the apparatus. In other examples, the marker elements in the first region 126a are located next to the first sensor 122a when the article 102 has been fully inserted into the apparatus 100. In addition, in some examples, the marker elements of the second region 126b may pass through/by the second sensor 122b as the article 102 is inserted into the apparatus. In other examples, the marker elements in the second region 126b are located next to the second sensor 122b when the article 102 has been fully inserted into the apparatus 100.

Where capacitive or resistive sensing is used, the marker 126 may be provided internally and/or externally of the article 102. The marker 126 may be literally "marked on" the article 102, such as by printing. Alternatively, the marker 126 may be provided in or on the article 102 by other techniques, such as being formed integrally with the article 102 during manufacture. As with the optical sensors, the marker 126 may comprise a first region 226a comprised of marker elements spaced at a predetermined distance and a second region 226b comprised of marker elements spaced at a varying distance from each other. The capacitive or resistive sensors may be configured to provide a first input indicative of a rate of movement of the article 202 and a second input indicative of a parameter associated with the article 202. In certain examples, and depending on the nature of the sensing that is used to sense the marker 126, the marker may be formed of an electrically conductive material. The marker 126 may be, for example, a metallic component such as aluminium or a conductive ink or ferrous or non-ferrous coating. The ink may be printed onto tipping paper of the article 102, using for example a rotogravure printing method, screen printing, ink jet printing, or any other suitable process.

In general, capacitive sensing as used herein operates by effectively sensing a change in capacitance when the article 102 is located within the apparatus 100. In effect, in an embodiment, a measure of the capacitance is obtained. If the capacitance meets one or more criteria, it may be decided that the article 102 is suitable for use with the apparatus 100, which can then proceed to operate as normal to heat the aerosolisable medium. Otherwise, if the capacitance does not meet the one or more criteria, it may be decided that the article 102 is not suitable for use with the apparatus 100, and the apparatus 100 does not function to heat the aerosolisable medium and/or may issue some warning message to the user. In general, capacitive sensing may work by providing the apparatus 100 with (at least) one electrode which in effect provides one "plate" of a capacitor, with the other "plate" of the capacitor being provided by the electrically conducting marker 126 of the apparatus 100 mentioned above. When the article 102 is inserted into the apparatus 100, a measure of the capacitance formed by the combination of the electrode of the apparatus 100 and the article 102 can be obtained, and then compared to one or more criteria to determine whether the apparatus 102 can then proceed to heat the article 102. As an alternative, the apparatus 100 may be provided with (at least) two electrodes, which in effect provide the pair of "plates" of a capacitor. When the article 102 is inserted into the apparatus 100, it is inserted between the two electrodes. As a result, the capacitance formed between the two electrodes of the apparatus 100 changes. A measure of this capacitance formed by the two electrodes of the apparatus 100 can be obtained, and then compared to one or more criteria to determine whether the apparatus 100 can then proceed to heat the article.

In other examples, the one or more sensors 122a, 122b comprises non-optical sensors, such as RF sensors or a hall effect sensor along with a permanent magnet or an electromagnet and a hall effect sensor. The markers may be formed from an appropriate material arranged to affect the non-optical signal received by the sensors 122a, 122b. For example, they may create a change in the level of the detected signal as a function of time, such as a trough (if the signal is absorbed) or a peak (if a signal is reflected).

In some examples, the one or more sensors 122a, 122b comprises at least two different sensing techniques. For example, one sensor, such as the first sensor 122a, may comprise an optical sensor and the other sensor, such as second sensor 122b, may comprise a non-optical sensor, such as a capacitive sensor.

Figure 5 shows a side view of an alternative example of an article 202 for use with an apparatus for heating aerosolisable medium. The article 202 may comprise a substantially flat sheet of card or paper. The aerosolisable material may be provided on one surface and the heater may heat the aerosolisable material from the opposite side (so that the sheet of card or paper is between aerosol material and heater). In this example, the marker 226 is in the form of a plurality of notches or holes formed in the article 202. As with the marker 126 shown in figure 4, the marker 226 in the example of figure 5 may comprise a first region 226a comprised of marker elements spaced at a predetermined distance and a second region 226b comprised of marker elements spaced at a varying distance from each other. The first region 226a enables a rate of movement of the article 202 to be determined and the second region 226b enabled a parameter or characteristic associated with the article 202 to be determined. Although article 202 is depicted as a rectangle, other shapes may also be used, including a square and a circle.

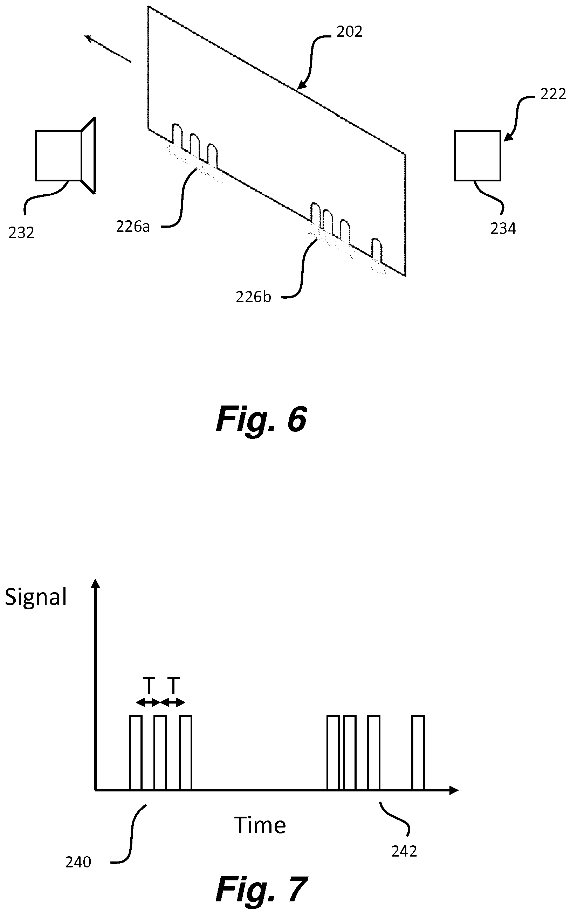

Figure 6 shows an illustrative example of an optical sensor arrangement. In this example, the one or more sensors 222 comprises a light source 232 and light receiver 234. The light source 232 is configured to provide light along a light path to the receiver 234. In use, as the article 202 is passed through, or adjacent to, the one or more sensors 222 in between the light source 232 and the receiver 234, the article 202 blocks the light and prevents it from being received at the receiver 234. In other examples, the article 202 reduces the amount of light being received at the receiver 234. However, as the marker 226, in the form of a plurality of notches, of the article 202 passes through the one or more sensors 222, light from the light source is no longer blocked and is be received by the receiver 234. Therefore, the quantity of light received at the receiver 234 will vary as the article 202 passes through the light path depending on whether a notch is within the light path between the light source 232 and the receiver 234 or not. The one or more sensors 222 are configured to provide this variation of the received light to the controller 116. In this example, the variation in light sensed by the one or more sensors 222 associated with the first region 226a of the marker may represent a first input indicative of the rate of movement of the article 202 to the controller 116 and enables the controller to determine the rate of movement of the article 202. The variation in light sensed by the one or more sensors 222 associated with the second region 226b of the marker represents a second input to the controller 116. The second input is indicative of a parameter of the article 202 and so enables the controller to determine the parameter of the article 202.

In the example shown in Figure 6, the one or more sensors 222 comprises a single light source 232 and light receiver 134. However, in other examples, the optical sensor may comprise an array of light sources and an array of light sensors. In the example of the marker comprising a reflective material, the light source and the light receiver 234 may be formed in a single element and light will be reflected back to the light source/receiver as a marker element passes by the one or more sensors 222.

In other examples, the one or more sensors 122a, 122b, 222 are configured to sense the marker 126, 226 by measuring the reflection or surface roughness from the surface of the article 102, 202. In other examples, the one or more sensors 122a, 122b, 222 may be configured to sense and read a marker 126, 226 in the form of a barcode or QR code. In other examples, the one or more sensors 122a, 122b, 222 may be configured to sense visible or invisible fluorescent material.

In other examples, the first region 126a may comprise a portion which is configured to be tracked by an optical tracking system to give an indication of the rate of movement independent of any markings, for example by tracking the surface using its variation in surface roughness. In that case, the first sensor 122a may comprise a light source, such as an LED, and a light sensor, such as a photocell. Light from the light source which is reflected from the consumable is received by the sensor. The light reflected varies as the article moves past the sensor 122a due to variations in the surface. This variation can be interpreted, for example by control electronics, to give a rate of movement. In these examples, the first region 126a may be provided by a dedicated portion on the article with specific surface properties, or by the overall properties of the outer surface of the article, for example the surface variation of a wrapper, such as a paper wrapper.

In one example, the controller 116 is configured to determine a parameter of the article 102, 202 based on the received first input and second input. Figure 7 shows an example of a signal that is received by the controller 116. The signal is a representation of the signal that would be generated as the article 202 shown in Figure 6 passes through the one or more sensors 222. In this example, the amplitude of the signal increases as each marker element of the first region 226a and second region 226b pass through the one or more sensors 222. The position of the peaks of signal is equivalent to the positioning of the marker elements on the article 202. In this example, the first set of peaks in indicative of the position of the first region 226a of markers and the second set of peaks 242 is indicative of the second region 226b. In this example, the first set of peaks 240 represents the first input indicative of a rate of movement of the article 202 and the second set of peaks 242 represents the second input indicative of a parameter associated with the article 202. In an example, the controller 116 is pre-programmed or receives information on the pre-determined distance between the marker elements of the first region 226a. Based on the pre-determined distance between the marker elements of the first region 226a and the time period (T) between adjacent peaks of the first input 240, the controller can determine the rate of movement of the article 202. In other examples, the one or more sensors 222 may determine the rate of movement of the article 202 and provide a first input in the form of the rate of movement to the controller 116. The controller 116 is configured to use the determined rate of movement of the article 202 to determine the arrangement of the second set of peaks 242. As the controller 116 is provided with the first input indicative of the rate of movement of the article 202, it is able to accurately determine the arrangement of the marker elements in the second region 226b.

The controller 116 may comprise pre-programmed information, such as a look-up table, that includes details of the various possible arrangements of marker elements of the second region 226b and what parameter is associated with each arrangement. Therefore, based on the first input indicative of the rate of movement of the article 202 and the second input indicative of a parameter associated with the article 202, the controller 116 is able to determine the parameter associated with the article 202.

The controller 116 may be arranged so that it will only heat an article 102 that it recognises, and will not operate in conjunction with an article 102 that it does not recognise. The apparatus 100 may be arranged so that it provides some indication to the user that the article 102 has not been recognised. This indication may be visual (for example a warning light, which may for example flash or be illuminated continuously for a period of time) and/or audible (for example a warning "beep" or the like). Alternatively or additionally, the apparatus 100 may be arranged so that, for example, it follows a first heating pattern when it recognises a first type of article 102 and follows a second, different heating pattern when it recognises a second type of article 102 (and optionally may provide yet further heating patterns for other types of article 102). The heating patterns may differ in a number of ways, for example the rate of delivery of heat to the aerosolisable medium, the timing of various heating cycles, which part(s) of the aerosolisable medium are heated first, etc., etc. This enables the same apparatus 100 to be used with different basic types of article 102 with minimal interaction required of the user.

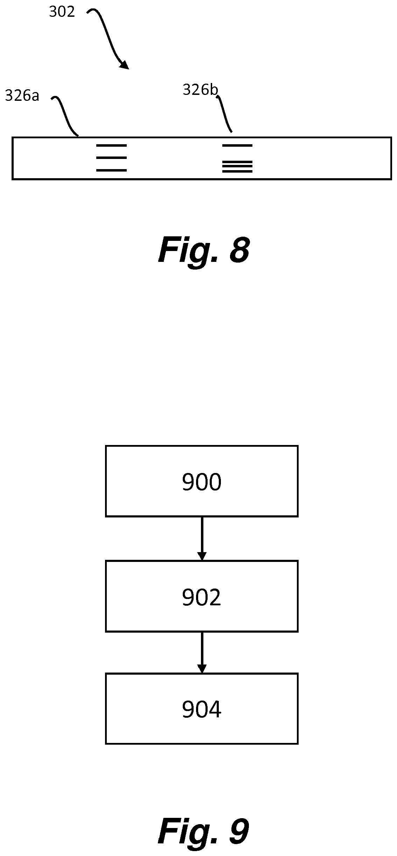

Figure 8 shows a schematic longitudinal side view of another example of an article 302 comprising aerosolisable medium for use with the apparatus 100. As with the article 102 shown in Figure 4, the article 302 comprises one or more markers 326a, 326b arranged in the form of optical lines. In this example, the lines extend substantially along the longitudinal axis of the article 302, rather than substantially perpendicular to the longitudinal axis, as is shown in the example of the article 102 in Figure 4.

As with the articles 102, 202 shown in the examples of figures 4 and 5, the marker 326 is split into a first region 326a and a second region 326b. The first region 326a may be configured to be sensed by the one or more sensors 122a, 122b to determine the rate of movement of the article 302. In this example, the article 302 is configured to be inserted into the apparatus 100 and rotated and the rate of movement is the rotational movement of the article 302 in the apparatus 100.

As with the examples above, the rate of movement of the article 302 may be determined by measuring the time period for marker elements of the first region 326a to pass one or more sensors 122a, 122b. In some examples, the marker elements of the first region 326a are spaced apart at a pre-determined, uniform distance, such that the rate of movement can be determined from the time period that at least two marker elements of the first region 326a pass the one or more sensors 122a, 122b.

The second region 326b may include marker elements that are configured to be sensed by the one or more sensors 122a, 122b to determine a parameter associated the article 302. In the example shown in figure 8, the second region 326b includes four marker elements in the form of lines with a varied spacing therebetween. In one example, the spacing of the marker elements may be such as to create a defined start of the marker element and a defined end of the marker elements. As the article 302 could be inserted into the apparatus 100 in any orientation, the article 302 would need to make a full or partial rotation for all of the marker elements to be read by the one or more sensors 122a, 122b.

In other examples, the apparatus includes an actuator configured to control the rate of movement of the article 102, 202, 302. For example, in the examples of the articles 102, 202 shown in Figures 4 and 5, the actuator may control the rate of movement in which the article 102, 202 is inserted into the apparatus 100 such that the article 102 is inserted into the chamber 112 at a predetermined rate. In some examples the predetermined rate is a uniform and substantially constant. Alternatively, in the example of the article 302 shown in Figure 7, the actuator may be configured to rotate the article at a predetermined rate. The actuator may be a motor operating at a constant force and/or constant speed. Alternatively, the actuator may take the form of a mechanical damped system. In some examples, the actuator may move the article 100 by a known distance or increment.

In the example of the article 102 comprising a substantially cylindrical rod, the rate of movement of the article 102 could be determined based on the movement of the actuator (e.g. through an encoder). A signal from the actuator may be provided to the control circuitry 116 to determine rate of movement of the article 102.

Another option is the inclusion of a time of flight (TOF) sensor (ultrasonic or light- based) to detect the rate of insertion of a consumable into a device and to correlate with the sensed signals from the marker detection system. The TOF sensor may be arranged, e.g., at the base of receptacle 112 and facing along the longitudinal axis of the receptacle 112. As a consumable is inserted into the receptacle, the consumable influences the TOF sensor, and from this influence the rate of insertion can be determined. The operating principles of TOF sensors are known and not explained in any more detail herein.

In another example, the apparatus also comprises a wheel with pins or a roller could that is configured to contact the article 102 as it is inserted into the apparatus 100. As the article 102 is inserted, the wheel is configured to rotate at the same rate as the article 102 is inserted into the device. Therefore, an indication of the rate of movement of the article 102 may be derived from the rotation rate of the wheel.

In these examples, the first input indicative of the rate of movement of the article 102, 202, 302 may be provided to the control circuitry 116 by the actuator, or alternatively may be pre-programmed into the control circuitry 116. In these examples, the article 102, 202, 302 may not include the marker elements of the first region 126a, 226a, 326a, and these would not be required if the first input indicative of rate of movement of the article 102, 202, 302 is provided by other means.

In some examples, the article 102, 202, 302 may have a location feature that enables the consumable to be inserted into the apparatus 100 with a defined orientation. For example, the article may comprise a protrusion or a cut-out feature that corresponds to a shape in the opening 106 of the apparatus 100. Thus, in some implementations, the article 102, 202, 302 may only be inserted into the apparatus 100 in a single orientation. In the example of the article 102, 202, 302 being subsequently rotated, the starting position would be known and as such there would be no requirement for the article 102, 202, 302 to be rotated by at least 360 degrees. In other examples, the article 102, 202, 302 may have a predefined finger holds or orientation to align or feed into a device (ensuring the consumable is inserted in a predefined manner.

In some examples the one or more sensors 122a, 122b may be arranged at a specific location within the apparatus 100. For example, the one or more sensors 122a, 122b may be arranged within the chamber 112 and may have a limited detection range. Similarly, the marker 126 may be arranged at a specific location on, or within the article 102, 202, 302, and may occupy a certain area or volume of the article 102. To ensure that the marker 126 is detected when a user inserts the article 102 into the receptacle, it is desirable for the apparatus 100 to be able to restrict the orientation of the article 102 to a single orientation when engaged with the chamber 112. This may ensure that the marker 126 is correctly aligned with the one or more sensors 122a, 122b, so that it can be detected. Restricting the orientation of the article 102, 202, 302 so that the marker and sensor are aligned can mean that only one sensor 122 is needed, rather than having a plurality of sensors arranged within the apparatus 100, which can reduce manufacturing costs of the apparatus 100, as well as weight. Additionally, or alternatively, it may allow a smaller marker 126 to be provided on or in the article.

Figure 9 shows an example of a flow diagram of an operation of the controller 116 of the apparatus 100. In step 900, the controller 116 receives a first input indicative of a rate of movement of the article 102, 202, 302. The first input indicative of the rate of movement of the article 102, 202, 302 may be provided by the one or more sensors 122a, 122b or alternatively may be pre-programmed into the controller 116 or provided to the controller 116 by other means. In step 902, the controller 116 receives a second input indicative of a parameter of the article 102, 202, 302. The second input indicative of a parameter of the article 102, 202, 302 is provided to the controller by the one or more sensors 122a, 122b. At step 904, the controller determines the parameter of the article 102, 202, 302 based on the received first input and second input.

In some examples, the controller 116 controls the operation of the one or more heaters 120 based on the parameter of said article, for example, if the controller determines that a counterfeit article has been inserted into the apparatus 100, then the heaters are not activated. Alternatively, the controller 116 may determine the type of aerosolisable medium within the article, such as solid, liquid or gel and tailor the heating profile accordingly.

The article 102, 202, 302 may comprise one or more flavourants. As used herein, the terms "flavour" and "flavourant" refer to materials which, where local regulations permit, may be used to create a desired taste or aroma in a product for adult consumers. They may include extracts (e.g., licorice, hydrangea, Japanese white bark magnolia leaf, chamomile, fenugreek, clove, menthol, Japanese mint, aniseed, cinnamon, herb, wintergreen, cherry, berry, peach, apple, Drambuie, bourbon, scotch, whiskey, spearmint, peppermint, lavender, cardamom, celery, cascarilla, nutmeg, sandalwood, bergamot, geranium, honey essence, rose oil, vanilla, lemon oil, orange oil, cassia, caraway, cognac, jasmine, ylang-ylang, sage, fennel, piment, ginger, anise, coriander, coffee, or a mint oil from any species of the genus Mentha), flavour enhancers, bitterness receptor site blockers, sensorial receptor site activators or stimulators, sugars and/or sugar substitutes (e.g., sucralose, acesulfame potassium, aspartame, saccharine, cyclamates, lactose, sucrose, glucose, fructose, sorbitol, or mannitol), and other additives such as charcoal, chlorophyll, minerals, botanicals, or breath freshening agents. They may be imitation, synthetic or natural ingredients or blends thereof. They may comprise natural or nature-identical aroma chemicals. They may be in any suitable form, for example, oil, liquid, powder, or gel.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, modifications not described above may also be employed without departing from the scope of the invention, which is defined in the accompanying claims.

## Claims

1. An apparatus (100) for generating aerosol from an aerosolisable medium, the apparatus comprising:
a housing (104);
a chamber (112) for receiving an article (102) comprising aerosolisable medium and including a marker (126);
a controller (116) configured to receive:
a first input indicative of a rate of movement of the article within the chamber and relative to the apparatus, received in use, in the chamber; and
a second input indicative of a parameter of said article,
wherein at least the second input is determined based on the marker.

2. The apparatus according to claim 1, wherein the controller is configured to determine the parameter of said article based on the second input and the first input.

3. The apparatus according to claims 1 or 2, wherein the apparatus comprises one or more aerosol generating elements (120) configured to be activated depending on the parameter of said article.

4. The apparatus according to claim 3, wherein the one or more aerosol generating elements comprises one or more heaters.

5. The apparatus according to claim 4, wherein the heater is configured to provide a first heating profile if the parameter has a first characteristic and the heater is configured to provide a second heating profile if the parameter has a second characteristic.

6. The apparatus according to any preceding claim, wherein the apparatus comprises an actuator configured to control the rate of movement of the article.

7. The apparatus according to claim 6, wherein the actuator is configured to rotate the article received in use in the chamber at a predetermined rate.

8. The apparatus according to claim 6, wherein the actuator is configured to insert the article into the chamber at a predetermined rate.

9. The apparatus according to any of claims 1 to 5, wherein the apparatus comprises a movement sensor configured to sense the rate of movement of the article and provide the first input.

10. The apparatus according to claim 9, wherein the movement sensor is configured to measure a time that at least a portion of the marker moves past the movement sensor to determine the rate of movement of the article.

11. The apparatus according to any preceding claim, wherein the apparatus comprises a parameter sensor configured to sense a characteristic associated with the marker to determine the second input.

12. The apparatus according to claim 11, wherein the parameter sensor comprises an optical sensor configured to sense an optical characteristic associated with the marker or wherein the parameter sensor is an electrical sensor.

13. A system comprising:
the apparatus of any of claims 1 to 12; and
an article (102) comprising aerosolisable medium for use with the apparatus of any of claims 1 to 11, the article comprising a marker (126) indicative of a parameter of the article.

14. A method of determining a parameter of an article (102) comprising aerosolisable medium, the method comprising:
receiving a first input indicative of a rate of movement of said article within a receptacle (112) of, and relative to, an apparatus (100) for generating aerosol from the aerosolisable medium;
receiving a second input indicative of a parameter of said article; and
determining the parameter of the article based on the received first input and second input.

15. The method of determining a parameter of an article according to claim 14, further comprising controlling the operation of one or more aerosol generating elements based on the parameter of said article.

## Patentansprüche

1. Vorrichtung (100) zum Erzeugen von Aerosol aus einem aerosolisierbaren Medium, wobei die Vorrichtung Folgendes umfasst:
ein Gehäuse (104);
eine Kammer (112) zum Aufnehmen eines Artikels (102), der ein aerosolisierbares Medium umfasst und eine Markierung (126) enthält;
eine Steuereinheit (116), die konfiguriert ist, um Folgendes zu empfangen:
eine erste Eingabe, die eine Geschwindigkeit einer Bewegung des Artikels innerhalb der Kammer und relativ zu der Vorrichtung, der bei einer Verwendung aufgenommen wird, in der Kammer angibt; und
eine zweite Eingabe, die einen Parameter des Artikels angibt, wobei mindestens die zweite Eingabe basierend auf der Markierung bestimmt wird.

2. Vorrichtung nach Anspruch 1, wobei die Steuereinheit konfiguriert ist, um den Parameter des Artikels basierend auf der zweiten Eingabe und der ersten Eingabe zu bestimmen.

3. Vorrichtung nach Anspruch 1 oder 2, wobei die Vorrichtung ein oder mehrere Aerosol erzeugende Elemente (120) umfasst, das/die konfiguriert ist/sind, um abhängig vom Parameter des Artikels eingeschaltet zu werden.

4. Vorrichtung nach Anspruch 3, wobei das eine oder die mehreren Aerosol erzeugenden Elemente ein oder mehrere Heizelemente umfasst/umfassen.

5. Vorrichtung nach Anspruch 4, wobei das Heizelement konfiguriert ist, um ein erstes Heizprofil bereitzustellen, wenn der Parameter eine erste Eigenschaft aufweist, und das Heizelement konfiguriert ist, um ein zweites Heizprofil bereitzustellen, wenn der Parameter eine zweite Eigenschaft aufweist.

6. Vorrichtung nach einem der vorhergehenden Ansprüche, wobei die Vorrichtung einen Aktor umfasst, der konfiguriert ist, um die Geschwindigkeit einer Bewegung des Artikels zu steuern.

7. Vorrichtung nach Anspruch 6, wobei der Aktor konfiguriert ist, um den bei einer Verwendung aufgenommenen Artikel in der Kammer bei einer vorgegebenen Geschwindigkeit zu drehen.

8. Vorrichtung nach Anspruch 6, wobei der Aktor konfiguriert ist, um den Artikel bei einer vorgegebenen Geschwindigkeit in die Kammer einzuführen.

9. Vorrichtung nach einem der Ansprüche 1 bis 5, wobei die Vorrichtung einen Bewegungssensor umfasst, der konfiguriert ist, um die Rate einer Bewegung des Artikels zu erfassen und die erste Eingabe bereitzustellen.

10. Vorrichtung nach Anspruch 9, wobei der Bewegungssensor konfiguriert ist, um eine Zeit zu messen, in der sich mindestens ein Abschnitt der Markierung an dem Bewegungssensor vorbeibewegt, um die Geschwindigkeit einer Bewegung des Artikels zu bestimmen.

11. Vorrichtung nach einem der vorhergehenden Ansprüche, wobei die Vorrichtung einen Parametersensor umfasst, der konfiguriert ist, um eine der Markierung zugeordnete Eigenschaft zu erfassen, um die zweite Eingabe zu bestimmen.

12. Vorrichtung nach Anspruch 11, wobei der Parametersensor einen optischen Sensor umfasst, der konfiguriert ist, um eine der Markierung zugeordnete optische Eigenschaft zu erfassen, oder wobei der Parametersensor ein elektrischer Sensor ist.

13. System, das Folgendes umfasst:
die Vorrichtung nach einem der Ansprüche 1 bis 12; und
einen Artikel (102), der ein aerosolisierbares Medium zur Verwendung mit der Vorrichtung nach einem der Ansprüche 1 bis 11 umfasst, wobei der Artikel eine Markierung (126), die einen Parameter des Artikels angibt, umfasst.

14. Verfahren zum Bestimmen eines Parameters eines Artikels (102), der ein aerosolisierbares Medium umfasst, wobei das Verfahren Folgendes umfasst:
Empfangen einer ersten Eingabe, die eine Geschwindigkeit einer Bewegung des Artikels innerhalb eines Aufnahmebehälters (112) einer Vorrichtung (100) und relativ zu dieser Vorrichtung zum Erzeugen von Aerosol aus dem aerosolisierbaren Medium angibt;
Empfangen einer zweiten Eingabe, die einen Parameter des Artikels angibt; und
Bestimmen des Parameters des Artikels basierend auf der empfangenen ersten Eingabe und der empfangenen zweiten Eingabe.

15. Verfahren zum Bestimmen eines Parameters eines Artikels nach Anspruch 14, das ferner das Steuern des Betriebs eines oder mehrerer Aerosol erzeugender Elemente basierend auf dem Parameter des Artikels umfasst.

## Revendications

1. Appareil (100) pour générer un aérosol à partir d'un milieu aérosolisable, l'appareil comprenant :
un logement (104) ;
une chambre (112) destinée à recevoir un article (102) comprenant un milieu aérosolisable et incluant un marqueur (126) ;
un dispositif de commande (116) configuré pour recevoir :
une première entrée indiquant une vitesse de mouvement de l'article à l'intérieur de la chambre et par rapport à l'appareil, reçu en utilisation, dans la chambre ;
une seconde entrée indiquant un paramètre dudit article, dans lequel au moins la seconde entrée est déterminée sur la base du marqueur.

2. Appareil selon la revendication 1, dans lequel le dispositif de commande est configuré pour déterminer le paramètre dudit article sur la base de la seconde entrée et de la première entrée.

3. Appareil selon les revendications 1 ou 2, dans lequel l'appareil comprend un ou plusieurs éléments de génération d'aérosol (120) configurés pour être activés en fonction du paramètre dudit article.

4. Appareil selon la revendication 3, dans lequel les un ou plusieurs éléments de génération d'aérosol comprennent un ou plusieurs dispositifs de chauffage.

5. Appareil selon la revendication 4, dans lequel le dispositif de chauffage est configuré pour fournir un premier profil de chauffage si le paramètre a une première caractéristique et le dispositif de chauffage est configuré pour fournir un second profil de chauffage si le paramètre a une seconde caractéristique.

6. Appareil selon l'une quelconque des revendications précédentes, dans lequel l'appareil comprend un actionneur configuré pour commander la vitesse de mouvement de l'article.

7. Appareil selon la revendication 6, dans lequel l'actionneur est configuré pour faire tourner l'article reçu en utilisation dans la chambre à une vitesse prédéterminée.

8. Appareil selon la revendication 6, dans lequel l'actionneur est configuré pour insérer l'article dans la chambre à une vitesse prédéterminée.

9. Appareil selon l'une quelconque des revendications 1 à 5, dans lequel l'appareil comprend un capteur de mouvement configuré pour détecter la vitesse de mouvement de l'article et fournir la première entrée.

10. Appareil selon la revendication 9, dans lequel le capteur de mouvement est configuré pour mesurer un moment où au moins une partie du marqueur se déplace au-delà du capteur de mouvement pour déterminer la vitesse de mouvement de l'article.

11. Appareil selon l'une quelconque des revendications précédentes, dans lequel l'appareil comprend un capteur de paramètre configuré pour détecter une caractéristique associée au marqueur pour déterminer la seconde entrée.

12. Appareil selon la revendication 11, dans lequel le capteur de paramètre comprend un capteur optique configuré pour détecter une caractéristique optique associée au marqueur ou dans lequel le capteur de paramètre est un capteur électrique.

13. Système comprenant :
l'appareil selon l'une quelconque des revendications 1 à 12 ; et
un article (102) comprenant un milieu aérosolisable destiné à être utilisé avec l'appareil selon l'une quelconque des revendications 1 à 11, l'article comprenant un marqueur (126) indiquant un paramètre de l'article.

14. Procédé de détermination d'un paramètre d'un article (102) comprenant un milieu aérosolisable, le procédé comprenant :
la réception d'une première entrée indiquant une vitesse de mouvement dudit article à l'intérieur d'un réceptacle (112) de, et par rapport à, un appareil (100) pour générer un aérosol à partir du milieu aérosolisable ;
la réception d'une seconde entrée indiquant un paramètre dudit article ; et
la détermination du paramètre de l'article sur la base de la première entrée et de la seconde entrée reçues.

15. Procédé de détermination d'un paramètre d'un article selon la revendication 14, comprenant en outre la commande du fonctionnement d'un ou plusieurs éléments de génération d'aérosol sur la base du paramètre dudit article.
